# EUROPEAN PATENT APPLICATION

(11) **EP 4 262 318 A1**
(43) Date of publication of application: **18.10.2023**
(21) Application number: 21918631.9
(22) Date of filing: 15.01.2021
(51) Int. Cl.: H04W 74/08, H04W 72/12

(54) **TRANSMISSION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Novagraaf Technologies
(86) International application number: PCT/CN2021/072312
(87) International publication number: WO 2022/151427

(57) **Abstract**

Provided are a transmission method, a terminal device and a network device. The method includes that the terminal device receives a Random Access Response (RAR), and the RAR carries an Uplink grant (UL grant) for repetition of a Message 3 (Msg3) in a random access procedure. The terminal device determines an RV used for the repetition of the Msg3. Based on the RAR, the terminal device performs repetition of the Msg3 by use of the RV. In the embodiments of the disclosure, the RV used for Msg3 repetition which is scheduled by the RAR may be determined.

## Description

### TECHNICAL FIELD

The disclosure relates to the field of communications, and in particular to a transmission method, a terminal device and a network device.

### BACKGROUND

In a 5th-Generation (5G) New Radio (NR) system, in order to support Ultra-Reliable and Low Latency Communication (URLLC) services, repetition of uplink data is adopted to improve transmission reliability. For example, a Physical Uplink Share Channel (PUSCH) may be subjected to repetition to improve the transmission reliability.

In the 5G NR system, a four-step random access procedure may be adopted for random access, including Message 1 (Msg1) - Msg4. Herein, Msg3 is carried by a PUSCH. In a 3rd Generation Partnership Project (3GPP) standard, repetition of a PUSCH which carries Msg3 may be adopted to improve the coverage performance. The PUSCH carrying Msg3 may also be called Msg3 PUSCH or Msg3. In a conventional art, Msg2, that is, a Random Access Response (RAR), is adopted to schedule repetition of Msg3.

For repetition of Msg3 scheduled by an RAR, how to determine a redundancy version (RV) used for the repetition has not been clearly defined at present.

### SUMMARY

Embodiments of the disclosure provide a transmission method, a terminal device and a network device.

The embodiments of the disclosure provide a transmission method, which may include the following operations.

A terminal device receives an RAR. The RAR carries an Uplink grant (UL grant) for repetition of an Msg3 in a random access procedure.

The terminal device determines an RV used for the repetition of the Msg3.

Based on the RAR, the terminal device performs repetition of the Msg3 by use of the RV.

The embodiments of the disclosure further provide a transmission method, which may include the following operations.

A network device sends an RAR to a terminal device, and the RAR carries a UL grant for repetition of an Msg3. The RAR is configured to determine an RV used for the repetition of the Msg3 at the terminal device, and the RV is used to perform repetition of the Msg3.

The embodiments of the disclosure further provide a terminal device, which may include: a receiving module, a determination module and a transmission module.

The receiving module is configured to receive an RAR. The RAR carries a UL grant for repetition of an Msg3 in a random access procedure.

The determination module is configured to determine an RV used for the repetition of the Msg3.

The transmission module is configured to perform, based on the RAR, repetition of the Msg3 by use of the RV.

The embodiments of the disclosure further provide a network device, which may include a first sending module.

The first sending module is configured to send an RAR to a terminal device, and the RAR carries a UL grant for repetition of an Msg3. The RAR is configured to determine an RV used for the repetition of the Msg3 at the terminal device, and the RV is used to perform repetition of the Msg3.

The embodiments of the disclosure further provide a terminal device, which includes a processor, a memory and a transceiver. The memory is configured to store a computer program, and the processor is configured to call and run the computer program stored in the memory to control the transceiver to implement the method as described in any of the above.

The embodiments of the disclosure further provide a network device, which includes a processor, a memory and a transceiver. The memory is configured to store a computer program, and the processor is configured to call and run the computer program stored in the memory to control the transceiver to implement the method as described in any of the above.

The embodiments of the disclosure further provide a chip, which includes a processor configured to call and run a computer program from a memory, to cause a device provided with the chip to implement the method as described in any of the above.

The embodiments of the disclosure further provide a computer readable storage medium configured to store a computer program, and the computer program enables a computer to execute the method as described in any of the above.

The embodiments of the disclosure further provide a computer program product, which includes a computer program instruction, and the computer program instruction enables a computer to execute the method as described in any of the above.

The embodiments of the disclosure further provide a computer program. The computer program enables a computer to execute the method as described in any of the above.

The embodiments of the disclosure further provide a communication system, which includes a terminal device and a communication device.

The terminal device is configured to execute the method as described in any of the above.

The communication device is configured to execute the method as described in any of the above.

In the embodiments of the disclosure, with regard to repetition of an Msg3, the terminal device may determine an RV used for the repetition, and perform the repetition of the Msg3 by use of the determined RV, so that the RV used for the repetition of the Msg3 is clear.

### BRIEF DESCRIPTION OF THE DRAWINGS

FIG. 1 is a schematic diagram of an application scenario according to an embodiment of the application.
FIG. 2 is a schematic flowchart of a transmission method 200 according to an embodiment of the disclosure.
FIG. 3A is an example diagram of an RV indicated through an RAR and used for repetition of an Msg3.
FIG. 3B is an example diagram of a value combination of RVs indicated through an RAR and used for repetition of an Msg3.
FIG. 3C is an example diagram of a high-layer signaling configuration or presetting for an RV used for repetition of an Msg3.
FIG. 4 is a schematic flowchart of a transmission method 400 according to an embodiment of the disclosure.
FIG. 5 is a structural schematic diagram of a terminal device 500 according to an embodiment of the disclosure.
FIG. 6 is a structural schematic diagram of a network device 600 according to an embodiment of the disclosure.
FIG. 7 is a schematic structural diagram of a communication device 700 according to an embodiment of the disclosure.
FIG. 8 is a structural schematic diagram of a chip 800 according to an embodiment of the disclosure.
FIG. 9 is a schematic block diagram of a communication system 900 according to an embodiment of the disclosure.

### DETAILED DESCRIPTION

Technical solutions in the embodiments of the disclosure will be described below in combination with the drawings in the embodiments of the disclosure.

It is to be noted that terms "first", "second", etc., in the specification, claims, and drawings of the embodiments of the disclosure are adopted not to describe a specific sequence or order but to distinguish similar objects. At the same time, the objects described by "first" and "second" may be the same or different.

The technical solution of the embodiments of the disclosure may be applied to various communication systems, for example, a Global System of Mobile communication (GSM), a Code Division Multiple Access (CDMA) system, a Wideband Code Division Multiple Access (WCDMA) system, a General Packet Radio Service (GPRS), a Long Term Evolution (LTE) system, an Advanced Long Term Evolution (LTE-A) system, an NR system, an evolved system of the NR system, an LTE-based access to unlicensed spectrum (LTE-U) system, an NR-based access to unlicensed spectrum (NR-U) system, a Universal Mobile Telecommunication System (UMTS), a Wireless Local Area Network (WLAN) and a Wireless Fidelity (WiFi), a 5th-generation (5G) communication system or another communication system.

Generally speaking, connections supported by a conventional communication system are usually limited in number and also easy to implement. However, along with the development of communication technologies, a mobile communication system will not only support conventional communication but also support, for example, Device to Device (D2D) communication, Machine to Machine (M2M) communication, Machine Type Communication (MTC) and Vehicle to Vehicle (V2V) communication. The embodiments of the disclosure may also be applied to these communication systems.

Optionally, the communication system in the embodiments of the disclosure may be applied to a Carrier Aggregation (CA) scenario, may also be applied to a Dual Connectivity (DC) scenario and may further be applied to a Standalone (SA) network deployment scenario.

An application spectrum is not limited in the embodiments of the disclosure. For example, the embodiments of the disclosure may be applied to a licensed spectrum and may also be applied to an unlicensed spectrum.

Each of the embodiments of the disclosure is described in combination with a network device and a terminal device. The terminal device may also be referred to as UE, an access terminal, a user unit, a user station, a mobile station, a mobile radio station, a remote station, a remote terminal, a mobile device, a user terminal, a terminal, a wireless communication device, a user agent, a user device, etc. The terminal device may be a STATION (ST) in WLAN, and may be a cell phone, a cordless phone, a Session Initiation Protocol (SIP) phone, a Wireless Local Loop (WLL) station, a Personal Digital Assistant (PDA), a handheld device with a radio communication function, a computing device or another processing device connected to a wireless modem, a vehicle device, a wearable device and a next-generation communication system, for example, a terminal device in an NR network, a terminal device in a future evolved Public Land Mobile Network (PLMN) or the like.

As an example rather than restriction, in the embodiments of the disclosure, the terminal device may also be a wearable device. The wearable device, also called a wearable intelligent device, is a generic term of wearable devices obtained by intelligent designing and development on daily wearing products, such as glasses, gloves, watches, clothes, and shoes. The wearable device is a portable device directly worn or integrated to clothes or accessory of a user. The wearable device not only is a hardware device but also can realize powerful functions by software support, data interaction, and cloud interaction. Generalized wearable intelligent devices include, for example, intelligent watches or intelligent glasses with complete functions and large sizes and capable of realizing all or part of functions independent of intelligent phones, and for example, various types of sign monitoring intelligent bands and intelligent jewelries of which each is dedicated to application functions of a certain type and required to be matched with other devices such as intelligent phones for use.

The network device may be a device configured to communicate with a mobile device. The network device may be an Access Point (AP) in the WLAN and a Base Transceiver Station (BTS) in the GSM or CDMA, or may be a NodeB (NB) in WCDMA, or may be an Evolutional Node B (eNB or eNodeB) in LTE, or a relay ST or AP, or a vehicle device, a wearable device, a network device (gNB) in the NR network, a network device in the future evolved PLMN, or the like.

In the embodiments of the disclosure, the network device may provide service for a cell, and the terminal device may communicate with the network device through a transmission resource (for example, a frequency-domain resource or a spectrum resource) for the cell. The cell may be a cell corresponding to the network device (for example, a base station). The cell may belong to a macro base station or a base station corresponding to a small cell. Here, the small cell may include: a metro cell, a micro cell, a pico cell, a femto cell and the like. These small cells have the characteristics such as small coverage and low transmitted power, and are suitable for providing high-rate data transmission service.

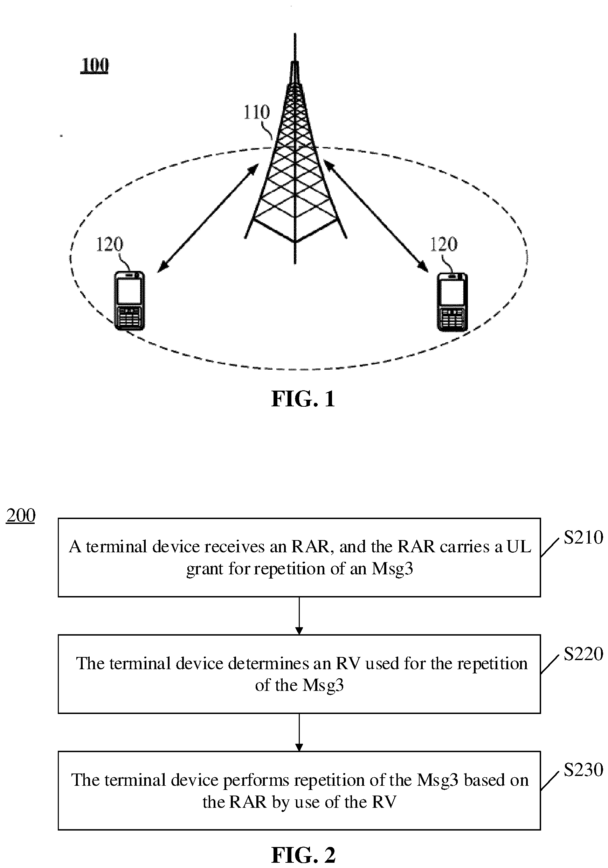

One network device 110 and two terminal devices 120 are exemplarily illustrated in FIG. 1. Optionally, the radio communication system 100 may include multiple network devices 110 and another number of terminal devices 120 may be included in coverage of each network device 110. There are no limits made thereto in the embodiments of the disclosure. The embodiments of the disclosure may be applied to one terminal device 120 and one network device 110, and may also be applied to one terminal device 120 and another terminal device 120.

Optionally, the radio communication system 100 may further include other network entities such as a Mobility Management Entity (MME), and an Access and Mobility Management Function (AMF), which is not limited in the embodiment of the disclosure.

It is to be understood that terms "system" and "network" in the disclosure may usually be exchanged herein. The term "and/or" herein describes only an association relationship for describing associated objects and represents that three relationships may exist. For example, A and/or B may represent the following three cases: Only A exists, both A and B exist, and only B exists. In addition, character "/" herein usually represents that previous and next associated objects form an "or" relationship.

It is to be understood that the "indication" mentioned in the embodiment of the disclosure may be a direct indication, or may be an indirect indication, or may represent an association relationship. For example, A indicates B, which may mean that A directly indicates B, for example, B being acquired through A, or may mean that A indirectly indicates B, for example, A indicating C, and B being acquired through C, or may mean that there is an association relationship between A and B.

In the description of the embodiment of the disclosure, the term "correspondence" may mean that there is a direct correspondence or indirect correspondence between the two, or may mean that there is an association relationship between the two, or may mean a relationship between indicating and being indicated, or between configuring and being configured.

In order to facilitate the understanding of the technical solution of the embodiments of the disclosure, description is made below to the related technology of the embodiments of the disclosure, and the following related technology as an alternative may be arbitrarily combined with the technical solution of the embodiments of the disclosure, which all belong to the protection scope of the embodiments of the disclosure.

In a 5G system, a quasi-LTE four-step procedure is adopted for a random access procedure, including an Msg1 - Msg4 transmission procedure. After selecting an appropriate cell to camp on, a UE may initiate a random access procedure and send a preamble, that is, Msg1, to a base station. After sending the preamble, the UE may monitor a Physical Downlink Control Channel (PDCCH) to receive a corresponding RAR. After detecting the preamble sent by the UE, the base station may send the RAR, that is, Msg2, which carries a UL grant of Msg3. RAR UL grant information includes time and frequency resource allocation information of a PUSCH, a Transmission Power Control Command (TPC), a frequency hopping and Modulation and Coding Scheme (MCS), etc. Based on the RAR, the UE may transmit the Msg3 on the PUSCH allocated by a network, finally the base station may send Msg4 to the UE, and the random access procedure ends.

The RAR UL grant information does not include information of an RV used by the terminal device to transmit the Msg3. When the terminal device transmits the Msg3, RV0 is used for transmission by default. The RV is designed to realize Incremental Redundancy (IR) Hybrid Automatic Repeat reQuest (HARQ) transmission. That is, redundant bits generated by an encoder are divided into a plurality of groups, each RV defines a transmission starting point, and different RVs are adopted for the first transmission and each HARQ re-transmission, so as to realize gradual accumulation of the redundant bits and complete the IR HARQ operation. There may be four types of RVs, including RV0, RV1, RV2 and RV3.

In response to not receiving the Msg3 correctly, the base station may instruct the terminal device to upload the Msg3 once again, which is called re-transmission of the Msg3. The base station may indicate scheduling information of the Msg3 re-transmission through Downlink Control Information (DCI), and the DCI sent by the base station each time indicates one re-transmission of the Msg3. In the four-step random access procedure, after the base station sends the RAR to the terminal device, the terminal device may send the Msg3 to the base station. In response to not receiving the Msg3 correctly, the base station may send the DCI to the terminal device to instruct the terminal device to retransmit the Msg3 once. The terminal device may retransmit the Msg3 once according to the instruction of the DCI. If the base station still does not receive the Msg3 correctly, the base station may send the DCI to the terminal device again to instruct the terminal device to retransmit the Msg3 once again until the base station correctly receives the Msg3.

The scheduling information indicated by the DCI, in addition to the information contained in the RAR UL grant information, may also include RV information used for the re-transmission of the Msg3 this time. When the terminal device retransmits the Msg3, the RV indicated by the RV information may be used for re-transmission.

At present, repetition of the Msg3 is introduced. A base station may use an RAR to schedule a terminal device to perform repetition of Msg3 multiple times. For example, the base station may use an RAR to instruct the terminal device to perform repetition of Msg3 for four times. After the terminal device performs repetition of the Msg3 for four times, if the base station does not receive the Msg3 correctly, the terminal device may be scheduled to perform re-transmission of the Msg3 through the DCI. According to the DCI, the terminal device re-transmits the Msg3 for four times.

Since the existing RAR scheduling information (that is, the RAR UL grant information) does not contain RV information, there is no relevant rule about which RV the terminal device shall use for repetition of Msg3.

Therefore, the embodiments of the disclosure provide a transmission method. FIG. 2 is a schematic flowchart of the transmission method 200 according to an embodiment of the disclosure. The method may be optionally applied to the system illustrated in FIG. 1, but is not limited thereto. The method includes at least part of the following contents.

At S210, a terminal device receives an RAR, and the RAR carries a UL grant for repetition of an Msg3.

At S220, the terminal device determines an RV used for the repetition of the Msg3.

At S230, the terminal device performs repetition of the Msg3 by use of the RV based on the RAR.

For example, after receiving an Msg1, a network device may send an RAR to terminal device, and the RAR carries a UL grant for re-transmission of a Msg3 for four times. The terminal device may determine an RV used for each repetition of the Msg3, and use the determined RV to perform each repetition.

For the manner that the terminal device determines the RV, the embodiment of the disclosure at least provides the following three implementations.

The first one is that, the RAR carries RV indication information, and the terminal device determines the RV used for the repetition of the Msg3 based on the RV indication information.

The second one is that, the network device sends configuration signaling, such as system information, and the configuration signaling carries the RV indication information. Based on the RV indication information in the received configuration signaling, the terminal device determines the RV used for the repetition of the Msg3.

The third one is that, the terminal device receives DCI used by the network device to schedule RAR transmission, and the DCI carries the RV indication information. Based on the RV indication information, the terminal device determines the RV used for the repetition of the Msg3.

The fourth one is that, the terminal device determines the RV used for the repetition of the Msg3 according to the presetting.

Specific embodiments are given below to detail the manner.

### Embodiment 1:

In the embodiment, in the four-step random access procedure, after receiving a preamble of a terminal device, a network device (such as a base station) sends an RAR to the terminal device, the RAR carries a UL grant for repetition of an Msg3, the UL grant includes an RV indication field, and RV indication information is carried in the RV indication field. In addition to the newly added RV indication field, the UL grant including the RV indication field may also include at least one of the followings:
a frequency hopping flag field;
a PUSCH frequency resource allocation field;
a PUSCH time resource allocation field;
an MCS field;
a TPC field for PUSCH;
a Channel State Information (CSI) request field; and
a Channel Access-Cyclic Prefix extension (Channel Access-CPext) field.

Hereinafter, other fields in the UL grant than the RV indication field are called a first bit field. In an implementation, the length of the first bit field in the UL grant including the RV indication field is the same as the length of the first bit field in the UL grant not including the RV indication field.

Table 1 is an example of the UL grant including the RV indication field. Table 1 illustrates the information and the length carried in each field in the UL grant including the RV indication field.

**Table 1**

| Field | Length (unit: bit) |
|---|---|
| Frequency hopping flag | 1 |
| PUSCH frequency resource allocation | 14 |
| PUSCH time resource allocation | 4 |
| MCS | 4 |
| TPC command for PUSCH | 3 |
| CSI request | 1 |
| RV indication | 2 |

Table 1 corresponds to a case without shared spectrum channel access. In Table 1, the length of the newly added RV indication field is 2 bits, which may indicate 4 types of RV information. For example, when the value of the RV indication field is 00, RV0 is represented. When the value is 01, RV1 is represented. When the value is 10, RV2 is represented. When the value is 11, RV3 is represented. The length is only an example, and the disclosure does not exclude other lengths. Except for the newly added RV indication field, the length of other fields (that is, the first bit field as above mentioned) is the same as the length of the corresponding fields in the UL grant excluding the RV indication field. It is to be seen that the length of the UL grant including the RV indication field is N bits larger than the length of the UL grant not including the RV indication field, where N is the length of the RV indication field.

In other implementations, the length of the first bit field in the UL grant including the RV indication field is M bits smaller than the length of the first bit field in the UL grant not including the RV indication field, where M is an integer greater than or equal to N, and N is the length of the RV indication field.

Table 2 is another example of the UL grant including the RV indication field. Table 2 illustrates the information and the length carried in each field in the UL grant including the RV indication field.

**Table 2**

| Field | Length (unit: bit) |
|---|---|
| Frequency hopping flag | 1 |
| PUSCH frequency resource allocation | 12 |
| RV indication field | 2 |
| PUSCH time resource allocation | 4 |
| MCS | 4 |
| TPC command for PUSCH | 3 |
| CSI request | 1 |

Table 2 corresponds to a case without shared spectrum channel access. In Table 2, the length of the newly added RV indication field is 2 bits, which may indicate 4 types of RV information. The length is only an example, and the disclosure does not exclude other lengths. Except for the newly added RV indication field, the length (12 bits) of the PUSCH frequency resource allocation field is 2 bits smaller than the length (14 bits) of the PUSCH frequency resource allocation field in the UL grant not including the RV indication field, which is equivalent to taking 2 bits from the original PUSCH frequency resource allocation field to carry the RV indication information. It is to be seen that in the example, the length of the UL grant including the RV indication field is equal to the length of the UL grant not including the RV indication field, and the length of the original UL grant is not changed in the embodiment.

In addition, according to the embodiment of the disclosure, some bits with a length larger than the RV indication field may be taken from the PUSCH frequency resource allocation field, part of which may be used to carry the RV indication information while the other part may be used to carry other information. For example, when four bits are taken from the PUSCH frequency resource allocation field, the length of the PUSCH frequency resource allocation field becomes 10 bits. Among the four bits, two bits may serve as the RV indication field to carry the RV indication information, and the other two bits may be used to carry other information.

Table 3 is another example of the UL grant including the RV indication field. Table 3 illustrates the information and the length carried by each field in the UL grant including the RV indication field.

**Table 3**

| Field | Length (unit: bit) |
|---|---|
| Frequency hopping flag | 1 |
| PUSCH frequency resource allocation | 10 |
| RV indication field | 2 |
| PUSCH time resource allocation | 4 |
| MCS | 4 |
| TPC command for PUSCH | 3 |
| CSI request | 1 |
| Channel Access-CPext | 2 |

Table 3 corresponds to a case with shared spectrum channel access. In Table 3, the length of the newly added RV indication field is 2 bits, which may indicate 4 types of RV information. The length is only an example, and the disclosure does not exclude other lengths. Except for the newly added RV indication field, the length (10 bits) of the PUSCH time resource allocation field is 2 bits smaller than the length (12 bits) thereof in the UL grant not including the RV indication field, which is equivalent to taking 2 bits from the original PUSCH time resource allocation field to carry the RV indication information. It is to be seen that in the example, the length of the UL grant including the RV indication field is equal to the length of the UL grant not including the RV indication field, and the length of the original UL grant is not changed in the embodiment.

Except for the example listed above, the embodiment of the disclosure may also take some bits from at least one another first bit field to carry the RV indication information. For example, 1 bit is taken from the PUSCH frequency resource allocation field and 1 bit is taken from the CSI request field, and the taken bits may be used as a new RV indication field to carry the RV indication information. The length of the new RV indication field is 2 bits, and RV indication information is carried in the RV indication field. The embodiments of the disclosure are not limited to the above manners. The length of the UL grant including the RV indication field is equal to the length of the UL grant not including the RV indication field, therefore the length of the existing UL grant may not be changed.

In the above example, the RV indication information carried by the UL grant can indicate a type of RV. However, the terminal device needs to perform repetition for many times during Msg3 repetition. Consideration is taken for how to determine an RV used for each repetition. In some implementations, the RV indication information may indicate an RV used for one repetition of Msg3. For example, the RV indication information may indicate an RV used for the repetition of the Msg3 with n mod 4=0, where n is a serial number of the repetition. Assuming that repetition is performed for k times, the value of the serial number n is [0, k-1]. Based on the RV indication information, the terminal device may determine the RV used for the 0th repetition of the Msg3, and based on the RV indication information and a preset RV sequence, the terminal device may determine respective RV used for each subsequent repetition of the Msg3.

For example, the network device may send an RAR to the terminal device. The RAR carries a UL grant, the UL grant carries RV indication information, and the RV indication information indicates that the RV used for repetition of Msg3 with n mod 4=0 is RV0, where n is the serial number of the repetition.

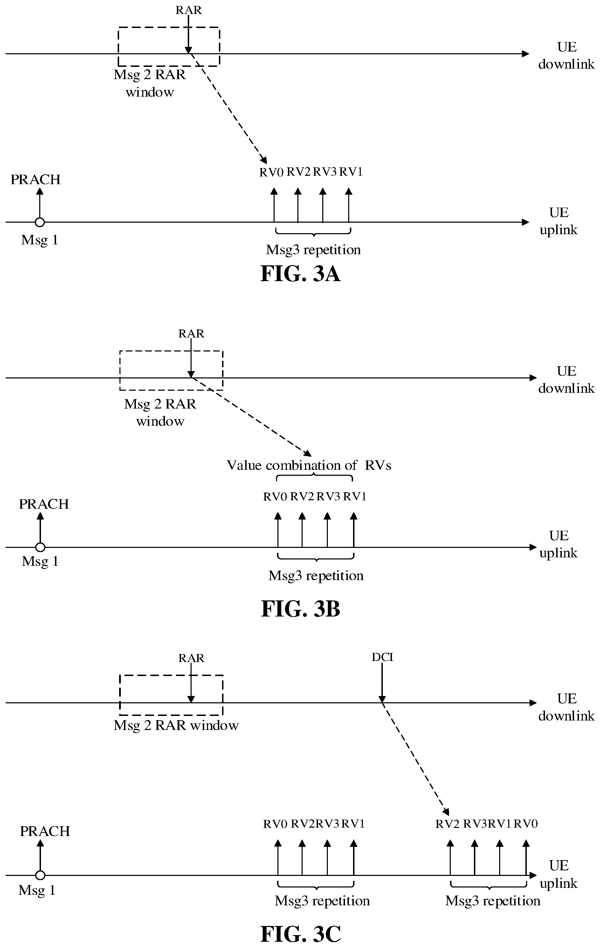

Based on the foregoing information, the terminal device may determine that RV0 is used for the 0th Msg3 repetition. In the case where the preset RV sequence is RV0-RV2- RV3- RV1 ..., the terminal device may determine that RV2 is used for the first Msg3 repetition, RV3 is used for the second Msg3 repetition, and RV1 is used for the third Msg3 repetition, repeating this cycle, and respective RV used for each Msg3 repetition can be determined. FIG. 3A is an example diagram of indicating an RV used for repetition of Msg3 through an RAR. As illustrated in FIG. 3A, in an RAR used to schedule a Msg3 repetition, an RV used for the 0th repetition is indicated. According to the indication and the preset RV sequence, the terminal device may determine respective RV used for each Msg3 repetition (four times of repetition as illustrated in FIG. 3A).

In the example, the RAR only indicates an RV value. In other implementations of the disclosure, the RAR may indicate a value combination of RVs, including RV values used for at least twice repetition among multiple times of Msg3 repetition. FIG. 3B is an example diagram of a value combination of RVs indicated through an RAR and used for repetition of an Msg3. As illustrated in FIG. 3B, in an RAR used to schedule Msg3 repetition, a value combination of RVs is indicated, for example, indicating respective RV used for each Msg3 repetition. According to the indication, the terminal device may determine respective RV used for each Msg3 repetition (four times of repetition in FIG. 3B).

In other implementations of the disclosure, a value combination of RVs indicated by an RAR may include RVs used for partial Msg3 repetition. Based on the RV indication information and other information contained in the RAR, the terminal device may determine respective RV used for each Msg3 repetition.

For example, the number of times of Msg3 repetition is pre-configured as four times, and the RAR indicates that the RVs used for twice Msg3 repetition are RV1 and RV2. Based on the RV indication information contained in the RAR, the terminal device may determine that the RVs used for the first two times of Msg3 repetition are RV1 and RV2, respectively. Based on the RV indication information and the preset RV sequence such as RV0- RV2- RV3- RV1 ..., the terminal device may determine that the RVs used for the last two times of Msg3 repetition are RV3 (RV3 is an RV after the last RV indicated by the RV indication information) and RV1, respectively. Or, based on the RV indication information contained in the RAR, the terminal device may determine that the RVs used for the last two times of Msg3 repetition are likewise RV1 and RV2, respectively.

Or, the terminal device may divide the four times of Msg3 repetition into two groups. Herein, the 0th group includes the 0th Msg3 repetition and the second Msg3 repetition, and the first group includes the first Msg3 repetition and the third Msg3 repetition. When the RV indication information includes RV1 and RV2, the terminal device determines that RV1 is used for the 0th group of Msg3 repetition, and RV1 is used for the first group of Msg3 repetition.

The above manners of indicating and determining an RV are all examples, which are not limited in the embodiment of the disclosure.

In the embodiment, the RV indication information is carried in the RAR, which can maintain the flexibility of an RV indication like DCI indicating PUSCH repetition in the conventional art, and can improve the transmission performance of the Msg3.

### Embodiment 2:

In the embodiment, the RV used for the repetition of the Msg3 may be configured through high-layer signaling. For example, the network device may send configuration signaling to the terminal device, and the configuration signaling carries RV indication information. The terminal device may receive the configuration signaling, and determine the RV used for the repetition of the Msg3 based on the RV indication information in the configuration signaling. The configuration signaling may be a Radio Resource Control (RRC) message or system information, and the configuration manner may be semi-static configuration. The specific configuration manner may be configured with multiple versions. For example, when the number of times of Msg3 repetition is four, four pieces of RV information are configured. Or, one piece of RV information (such as the RV information of the first Msg3 for repetition) is configured. The terminal device may determine the RV information of the first Msg3 based on the configuration, and the RVs used for the repetition of the Msg3 in the following times may be determined according to a preset rule.

### Embodiment 3:

In the embodiment, the RV used for the repetition of the Msg3 may be indicated by the DCI which schedules the RAR transmission.

For example, the terminal device may receive the DCI used for scheduling transmission of the RAR, the DCI includes an RV indication field, and RV indication information is carried in the RV indication field.

The terminal device may determine the RV used for the repetition of the Msg3 based on the RV indication information.

In one implementation, the RV indication field may be a new RV indication field added in the DCI, and is used to indicate the RV used for the repetition of the Msg3.

Or, since the RV indication field exists in the DCI, and the RV indication field carries the RV information used by a Physical Downlink Share Channel (PDSCH), the existing RV indication field in the DCI may be used, and the existing RV indication field may indicate both the RV information used by a PDSCH and the RV used for the repetition of the Msg3.

In other implementations, the RV used for the repetition of the Msg3 may be preset. The terminal device may determine the RV used for the repetition of the Msg3 according to the presetting.

FIG. 3C is an example diagram of an RV for repetition of an Msg3, which is configured by high-layer signaling, or is indicated by DCI for scheduling transmission of an RAR, or is preset. As illustrated in FIG. 3C, after receiving the RAR information, the terminal device may perform repetition of Msg3, and the terminal device may determine respective RV used for each repetition of the Msg3 according to presetting or according to an indication in DCI for scheduling transmission of an RAR or according to a high-layer signaling configuration. Subsequently, when re-transmission of the Msg3 is scheduled by the DCI, the RV used for the re-transmission is indicated in the DCI.

The RV indication information carried in the configuration signaling, the RV information indicated by the DCI for scheduling transmission of the RAR, or the preset RV may indicate an RV value, or indicate an RV value combination of more than two RVs. According to the RV value /the value combination of the RVs and other information (such as a RV sequence), the terminal device may determine respective RV used for each repetition of the Msg3, and the specific determination manner is the same as the manner in the embodiment I, which is not repeated here.

Or, the RV indication information carried in the configuration signaling, the RV indicated by the DCI for scheduling transmission of the RAR, or the preset RV information may indicate the RV used for each repetition of the Msg3, and the terminal device may directly determine the RV value according to the RV information. For example, the repetition of the Msg3 is configured in advance for four times, and the RV indication information carried in the configuration signaling or the preset RV information indicates that four RV values are "0231", which means that RV0, RV2, RV3 and RV1 are respectively used for the four repetitions of the Msg3. Or, it is indicated that the four RV values are "0011", which means that RV0, RV0, RV1 and RV1 are respectively used for the four repetitions of the Msg3. The terminal device may perform repetition of the Msg3 according to the RV information. The above RV value is only an example, which is not limited in the embodiment of the disclosure.

In the embodiment, an RV value for a repetition of an Msg3 may be indicated by DCI for scheduling transmission of the RAR, or through a high-layer signaling configuration, or according to presetting, which can avoid changing existing RAR content and not increase the overhead of an RAR. Meanwhile, a degree of flexibility of RV indication can also be ensured by the high-layer signaling configuration and by the indication by the DCI for scheduling transmission of the RAR.

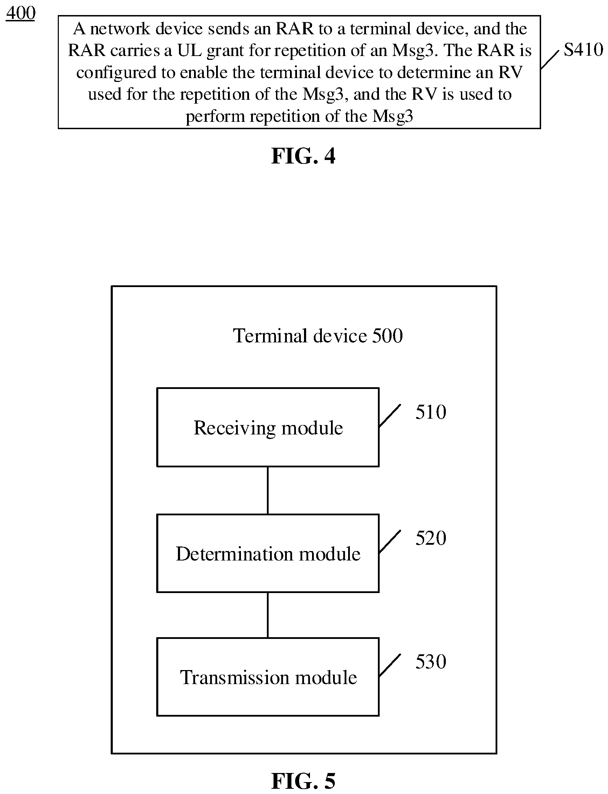

The embodiments of the disclosure further provide a transmission method. FIG. 4 is a schematic flowchart of the transmission method 400 according to an embodiment of the disclosure. The method may be optionally applied to the system illustrated in FIG. 1, but is not limited thereto. The method includes at least part of the following contents. The following operations are included.

At S410, a network device sends an RAR to a terminal device, and the RAR carries a UL grant for repetition of an Msg3. The RAR is configured to enable the terminal device to determine an RV used for the repetition of the Msg3, and the RV is used to perform repetition of the Msg3.

Optionally, RV indication information may be carried by the UL grant, and the RV indication information is configured for the terminal device to determine the RV used for the repetition of the Msg3.

Optionally, the UL grant may include an RV indication field, and the RV indication information may be carried in the RV indication field.

Optionally, the UL grant may further include a first bit field, and the first bit field may include at least one of the following items:
a frequency hopping flag field;
a PUSCH frequency resource allocation field;
a PUSCH time resource allocation field;
an MCS field;
a power control command TPC field for PUSCH;
a CSI request field; and
a Channel Access-CPext field.

Optionally, the UL grant including the RV indication field and the UL grant not including the RV indication field may be provided with at least one identical first bit field.

Moreover, a length of the first bit field in the UL grant including the RV indication field may be the same as a length of the first bit field in the UL grant not including the RV indication field.

Optionally, the UL grant including the RV indication field and the UL grant not including the RV indication field may be provided with at least one identical first bit field.

Moreover, a length of the first bit field in the UL grant including the RV indication field is M bits smaller than a length of the first bit field in the UL grant not including the RV indication field, where M is an integer greater than or equal to N, and N is a length of the RV indication field.

Optionally, the method may further include the following operations.

The network device sends configuration signaling to the terminal device, the configuration signaling carries RV indication information, and the RV indication information is configured for the terminal device to determine the RV used for the repetition of the Msg3.

Optionally, the method may further include the following operations.

The network device sends, to the terminal device, DCI used for scheduling RAR transmission, the DCI includes an RV indication field, and RV indication information is carried in the RV indication field. The RV indication information is configured for the terminal device to determine the RV used for the repetition of the Msg3.

Optionally, the RV indication field may be configured to indicate the RV used for the repetition of the Msg3.

Optionally, the RV indication field may be configured to indicate the RV information used by the PDSCH.

Optionally, the RV indication information may indicate the RV used for at least one repetition of the Msg3.

Optionally, the RV indication information may indicate the RV used for the repetition of the Msg3 with n mod 4=0, where n is a serial number of the repetition.

The embodiments of the disclosure further provide a terminal device. FIG. 5 is a structural schematic diagram of the terminal device 500 according to an embodiment of the disclosure, including a receiving module 510, a determination module 520 and a transmission module 530.

The receiving module 510 is configured to receive an RAR. The RAR carries a UL grant for repetition of an Msg3 in a random access procedure.

The determination module 520 is configured to determine an RV used for the repetition of the Msg3.

The transmission module 530 is configured to perform, based on the RAR, repetition of the Msg3 by use of the RV.

Optionally, the determination module 520 is configured to acquire RV indication information carried by the UL grant, and determine the RV used for the repetition of the Msg3 based on the RV indication information.

Optionally, the UL grant may include an RV indication field, and the RV indication information may be carried in the RV indication field.

Optionally, the UL grant may further include a first bit field, and the first bit field may include at least one of the following items:
a frequency hopping flag field;
a PUSCH frequency resource allocation field;
a PUSCH time resource allocation field;
an MCS field;
a power control command TPC field for PUSCH;
a CSI request field; and
a Channel Access-CPext field.

Optionally, the UL grant including the RV indication field and the UL grant not including the RV indication field may be provided with at least one identical first bit field.

Moreover, a length of the first bit field in the UL grant including the RV indication field may be the same as a length of the first bit field in the UL grant not including the RV indication field.

Optionally, the UL grant including the RV indication field and the UL grant not including the RV indication field may be provided with at least one identical first bit field.

Moreover, a length of the first bit field in the UL grant including the RV indication field may be M bits smaller than a length of the first bit field in the UL grant not including the RV indication field, where M is an integer greater than or equal to N, and N is the length of the RV indication field.

Optionally, the determination module 520 is configured to receive configuration signaling which carries RV indication information, and determine the RV used for the repetition of the Msg3 based on the RV indication information.

Optionally, the determination module 520 is configured to: receive Downlink Control Information (DCI) used for scheduling transmission of the RAR, wherein the DCI comprises an RV indication field, and RV indication information is carried in the RV indication field; and determine the RV used for the repetition of the Msg3 based on the RV indication information.

Optionally, the RV indication field may be configured to indicate the RV used for the repetition of the Msg3.

Optionally, the RV indication field may be configured to indicate RV information used by a PDSCH.

Optionally, the determination module 520 is configured to determine the RV used for the repetition of the Msg3 according to presetting.

Optionally, the RV indication information may indicate the RV used for at least one time of repetition of the Msg3.

Optionally, the RV indication information may indicate the RV used for the repetition of the Msg3 with n mod 4=0, where n is a serial number of the repetition.

It is to be understood that the above-mentioned and other operations and/or functions of the modules in the terminal device according to the embodiment of the disclosure are respectively to realize the corresponding flow of the terminal device in the method 200 of FIG. 2, so elaborations are omitted here for brevity.

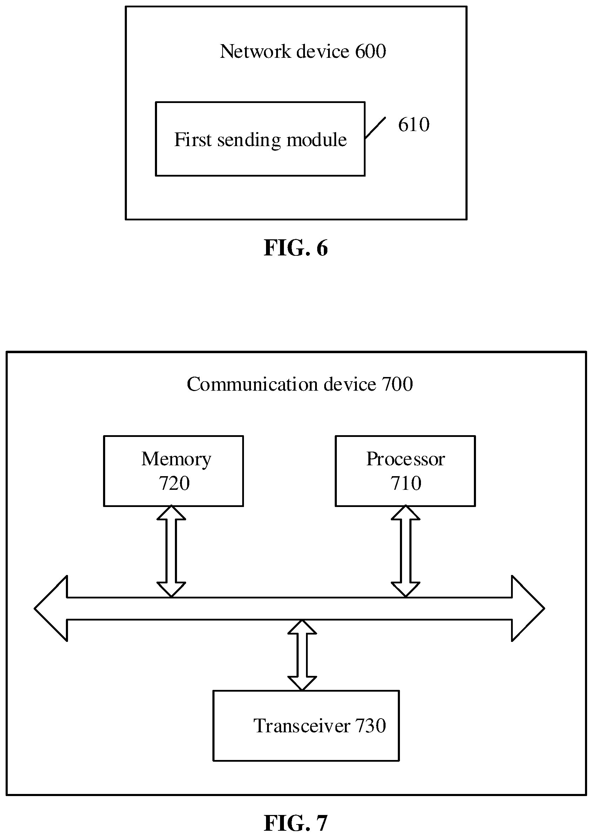

The embodiments of the disclosure further provide a network device. FIG. 6 is a structural schematic diagram of the network device 600 according to an embodiment of the disclosure, including: a first sending module 610.

The first sending module 610 is configured to send an RAR to a terminal device, and the RAR carries a UL grant for repetition of an Msg3. The RAR is configured to enable a terminal device to determine an RV used for the repetition of the Msg3, and the RV is used to perform repetition of the Msg3.

Optionally, RV indication information may be carried by the UL grant, and the RV indication information may be configured for the terminal device to determine the RV used for the repetition of the Msg3.

Optionally, the UL grant may include an RV indication field, and the RV indication information may be carried in the RV indication field.

Optionally, the UL grant may further include a first bit field, and the first bit field may include at least one of the following items:
a frequency hopping flag field;
a PUSCH frequency resource allocation field;
a PUSCH time resource allocation field;
an MCS field;
a power control command TPC field for PUSCH;
a CSI request field; and
a Channel Access-CPext field.

Optionally, the UL grant including the RV indication field and the UL grant not including the RV indication field may be provided with at least one identical first bit field.

Moreover, a length of the first bit field in the UL grant including the RV indication field may be the same as a length of the first bit field in the UL grant not including the RV indication field.

Optionally, the UL grant including the RV indication field and the UL grant not including the RV indication field may be provided with at least one identical first bit field.

Moreover, a length of the first bit field in the UL grant including the RV indication field may be M bits smaller than a length of the first bit field in the UL grant not including the RV indication field, where M is an integer greater than or equal to N, and N is the length of the RV indication field.

Optionally, the network device may further include: a configuration module.

The configuration module is configured to send configuration signaling to the terminal device, the configuration signaling carries RV indication information, and the RV indication information is configured for the terminal device to determine the RV used for the repetition of the Msg3.

Optionally, the network device may further include: a second sending module.

The second sending module is configured to send, to the terminal device, DCI used for scheduling RAR transmission, the DCI includes an RV indication field, and RV indication information is carried in the RV indication field. The RV indication information is configured for the terminal device to determine the RV used for the repetition of the Msg3.

Optionally, the RV indication field may be configured to indicate the RV used for the repetition of the Msg3.

Optionally, the RV indication field may be configured to indicate the RV information used by a PDSCH.

Optionally, the RV indication information may indicate the RV used for at least one time of repetition of the Msg3.

Optionally, the RV indication information may indicate the RV used for the repetition of the Msg3 with n mod 4=0, where n is a serial number of the repetition.

It is to be understood that the above-mentioned and other operations and/or functions of the modules in the network device according to the embodiment of the disclosure are respectively to realize the corresponding flow of the network device in the method 400 of FIG. 4, so elaborations are omitted here for brevity.

It is to be noted that the function described with respect to each module (submodule, unit, component, or the like) in the terminal device 500 and network device 600 of the embodiment of the disclosure may be realized by different modules (submodules, units, components, or the like), or by the same module (submodule, unit, component or the like). For example, the first sending module and the second sending module may be different modules or may be the same module, both of which can realize the corresponding function thereof in the embodiment of the disclosure. In addition, the sending module and the receiving module in the embodiment of the disclosure may be realized by the transceiver of the device, and some or all of the other modules may be realized by the processor of the device.

FIG. 7 is a schematic structural diagram of a communication device 700 according to an embodiment of the disclosure. The communication device 700 as illustrated in FIG. 7 includes a processor 710, and the processor 710 may call and run a computer program from a memory to implement the method in the embodiment of the disclosure.

Optionally, as illustrated in FIG. 7, the communication device 700 may also include a memory 720. Herein, the processor 710 may call and run a computer program from the memory 720 to implement the method in the embodiment of the disclosure.

Herein, the memory 720 may be a separate device independent of the processor 710 or integrated in the processor 710.

Optionally, as illustrated in FIG. 7, the communication device 700 may also include a transceiver 730, and the processor 710 may control the transceiver 730 to communicate with other devices. Specifically, same may send information or data to other devices, or receive the information or data sent by other devices.

Herein, the transceiver 1730 may include a transmitter and a receiver. The transceiver 730 may further include an antenna, and the number of antennas may be one or more.

Optionally, the communication device 700 may be the terminal device in the embodiments of the disclosure. The communication device 700 may implement corresponding flows implemented by the terminal device in each method in the embodiments of the disclosure. For brevity, elaborations are omitted herein.

Optionally, the communication device 700 may be the network device of the embodiments of the disclosure. The communication device 700 may implement corresponding flows implemented by the network device in each method of the embodiments of the disclosure. For brevity, elaborations are omitted herein.

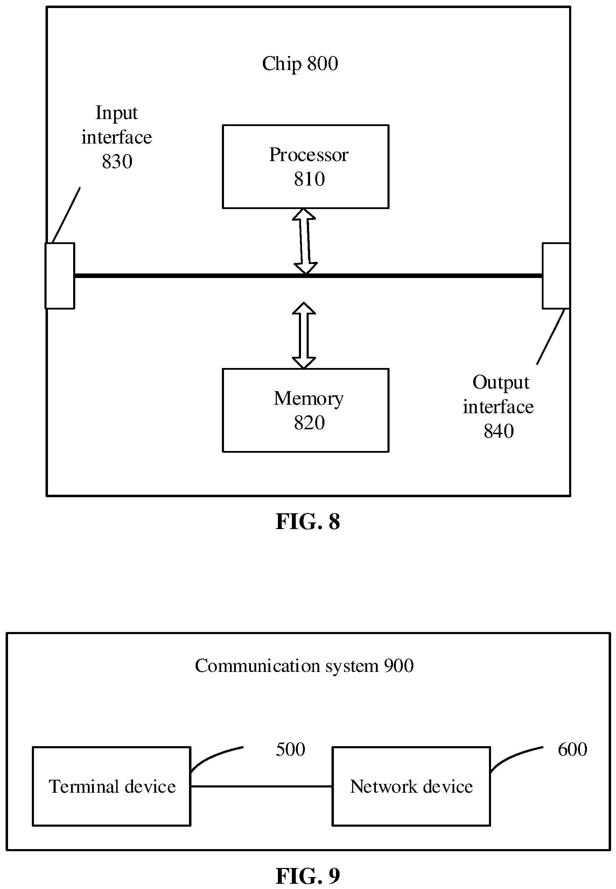

FIG. 8 is a structural schematic diagram of a chip 800 according to an embodiment of the disclosure. As illustrated in FIG. 8, the chip 800 includes a processor 810, and the processor 810 may call and run a computer program from a memory to implement the method in the embodiment of the disclosure.

Optionally, as illustrated in FIG. 8, the chip 800 may also include a memory 820. The processor 810 may call and run the computer program from the memory 820 to implement the method in the embodiment of the disclosure.

The memory 820 may be a separate device independent of the processor 810 or integrated in the processor 810.

Optionally, the chip 800 may also include an input interface 830. The processor 810 may control the input interface 830 to communicate with other devices or chips, and specifically, may acquire information or data sent by other devices or chips.

Optionally, the chip 800 may also include an output interface 840. The processor 810 may control the output interface 840 to communicate with other devices or chips, and specifically, may output information or data to other devices or chips.

Optionally, the chip may be applied to the terminal device of the embodiments of the disclosure. The chip may implement corresponding flows implemented by the terminal device in each method of the embodiments of the disclosure. For brevity, elaborations are omitted herein.

Optionally, the chip may be applied to the network device of the embodiments of the disclosure. The chip may implement corresponding flows implemented by the network device in each method of the embodiments of the disclosure. For brevity, elaborations are omitted herein.

It is to be understood that the chip mentioned in the embodiment of the disclosure may also be called a system-level chip, a system chip, a chip system, a system on chip, or the like.

The processor mentioned above may be a general-purpose processor, a Digital Signal Processor (DSP), a Field Programmable Gate Array (FPGA), an Application Specific Integrated Circuit (ASIC), or another programmable logical device, transistor logical device, discrete hardware component, etc. The general-purpose processor mentioned above may be a microprocessor, or any conventional processor, etc.

The memory mentioned above may be a volatile memory or a nonvolatile memory, or may include both volatile and nonvolatile memories. Herein, the nonvolatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM).

It is to be understood that the memory is exemplarily but unlimitedly described. For example, the memory in the embodiments of the disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), and a Direct Rambus RAM (DR RAM). That is, the memory in the embodiments of the disclosure is intended to include, but not limited to, memories of these and any other proper types.

FIG. 9 is a schematic block diagram of a communication system 900 according to an embodiment of the disclosure. The communication system 900 includes a terminal device 500 and a network device 600.

The terminal device 500 may be configured to realize the corresponding functions realized by the terminal device in the method of various embodiments of the disclosure, and the network device 600 may be configured to realize the corresponding functions realized by the network device in the method of various embodiments of the disclosure. For brevity, elaborations are omitted herein.

The embodiments may be implemented completely or partially through software, hardware, firmware or any combination thereof. During implementation with the software, the embodiments may be implemented completely or partially in form of a computer program product. The computer program product includes one or more computer instructions. When the computer program instruction is loaded and executed on a computer, the flows or functions according to the embodiments of the disclosure are completely or partially generated. The computer may be a universal computer, a dedicated computer, a computer network, or another programmable device. The computer instruction may be stored in a computer-readable storage medium or transmitted from a computer-readable storage medium to another computer-readable storage medium. For example, the computer instruction may be transmitted from a website, computer, server, or data center to another website, computer, server, or data center in a wired (such as coaxial cable, optical fiber, and Digital Subscriber Line (DSL)) or wireless (such as infrared, radio, and microwave) manner. The computer-readable storage medium may be any available medium accessible for the computer or a data storage device integrated with one or more available media, such as a server and a data center. The available medium may be a magnetic medium (for example, a floppy disk, a hard disk and a magnetic tape), an optical medium (for example, a Digital Versatile Disc (DVD)), a semiconductor medium (for example, a Solid State Disk (SSD)) or the like.

It is further to be understood that the sequence numbers of the foregoing processes do not mean execution sequences in various embodiments of the disclosure. The execution sequences of the processes should be determined according to functions and internal logics of the processes, and should not be construed as any limitation to the implementation processes of the embodiments of the disclosure.

Those skilled in the art may clearly learn about that specific working processes of the system, device, and unit described above may refer to the corresponding processes in the method embodiment and will not be elaborated herein for ease and briefness of description.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subjected to the scope of protection of the claims.

## Claims

1. A transmission method, comprising:
receiving, by a terminal device, a Random Access Response (RAR), wherein the RAR carries an Uplink grant (UL grant) for repetition of a Message 3 (Msg3) in a random access procedure;
determining, by the terminal device, a redundancy version (RV) used for the repetition of the Msg3; and
performing, by the terminal device, repetition of the Msg3 based on the RAR by use of the RV.

2. The method according to claim 1, wherein determining, by the terminal device, the RV used for the repetition of the Msg3 comprises:
acquiring, by the terminal device, RV indication information carried by the UL grant; and
determining, by the terminal device, the RV used for the repetition of the Msg3 based on the RV indication information.

3. The method according to claim 2, wherein the UL grant comprises an RV indication field, and the RV indication information is carried in the RV indication field.

4. The method according to claim 3, wherein the UL grant further comprises a first bit field, and the first bit field comprises at least one of following items:
a frequency hopping flag field;
a Physical Uplink Share Channel (PUSCH) frequency resource allocation field;
a PUSCH time resource allocation field;
a Modulation and Coding Scheme (MCS) field;
a Transmission Power Control Command (TPC) field for PUSCH;
a Channel State Information (CSI) request field; and
a Channel Access-Cyclic Prefix Extension (Channel Access-CPext) field.

5. The method according to claim 4, wherein the UL grant comprising the RV indication field and the UL grant not comprising the RV indication field are provided with at least one identical first bit field,
wherein the first bit field in the UL grant comprising the RV indication field has a same length as the first bit field in the UL grant not comprising the RV indication field.

6. The method according to claim 4, wherein the UL grant comprising the RV indication field and the UL grant not comprising the RV indication field are provided with at least one identical first bit field,
wherein a length of the first bit field in the UL grant comprising the RV indication field is M bits smaller than a length of the first bit field in the UL grant not comprising the RV indication field, wherein M is an integer greater than or equal to N, and N is a length of the RV indication field.

7. The method according to claim 1, wherein determining, by the terminal device, the RV used for the repetition of the Msg3 comprises:
receiving, by the terminal device, configuration signaling, wherein the configuration signaling carries RV indication information; and
determining, by the terminal device, the RV used for the repetition of the Msg3 based on the RV indication information.

8. The method according to claim 1, wherein determining, by the terminal device, the RV used for the repetition of the Msg3 comprises:
receiving, by the terminal device, Downlink Control Information (DCI) used for scheduling transmission of the RAR, wherein the DCI comprises an RV indication field, and RV indication information is carried in the RV indication field; and
determining, by the terminal device, the RV used for the repetition of the Msg3 based on the RV indication information.

9. The method according to claim 8, wherein the RV indication field is configured to indicate the RV used for the repetition of the Msg3.

10. The method according to claim 8, wherein the RV indication field is configured to indicate RV information used by a Physical Downlink Share Channel (PDSCH).

11. The method according to claim 1, wherein determining, by the terminal device, the RV used for the repetition of the Msg3 comprises:
determining, by the terminal device, the RV used for the repetition of the Msg3 according to presetting.

12. The method according to any one of claims 2 to 10, wherein the RV indication information indicates the RV used for at least one time of repetition of the Msg3.

13. The method according to any one of claims 2 to 10, wherein the RV indication information indicates the RV used for the repetition of the Msg3 with n mod 4=0, wherein n is a serial number of the repetition.

14. A transmission method, comprising:
sending, by a network device, a Random Access Response (RAR) to a terminal device, wherein the RAR carries an Uplink grant (UL grant) for repetition of a Message 3 (Msg3), the RAR is configured to determine a redundancy version (RV) used for the repetition of the Msg3 at the terminal device, and the RV is used to perform the repetition of the Msg3.

15. The method according to claim 14, wherein RV indication information is carried by the UL grant, and the RV indication information is configured to determine the RV used for the repetition of the Msg3 at the terminal device.

16. The method according to claim 15, wherein the UL grant comprises an RV indication field, and the RV indication information is carried in the RV indication field.

17. The method according to claim 16, wherein the UL grant further comprises a first bit field, and the first bit field comprises at least one of following items:
a frequency hopping flag field;
a Physical Uplink Share Channel (PUSCH) frequency resource allocation field;
a PUSCH time resource allocation field;
a Modulation and Coding Scheme (MCS) field;
a Transmission Power Control Command (TPC) field for PUSCH;
a Channel State Information (CSI) request field; and
a Channel Access-Cyclic Prefix Extension (Channel Access-CPext) field.

18. The method according to claim 17, wherein the UL grant comprising the RV indication field and the UL grant not comprising the RV indication field are provided with at least one identical first bit field,
wherein a length of the first bit field in the UL grant comprising the RV indication field is as same as a length of the first bit field in the UL grant not comprising the RV indication field.

19. The method according to claim 17, wherein the UL grant comprising the RV indication field and the UL grant not comprising the RV indication field are provided with at least one identical first bit field,
wherein a length of the first bit field in the UL grant comprising the RV indication field is M bits smaller than a length of the first bit field in the UL grant not comprising the RV indication field, wherein M is an integer greater than or equal to N, and N is a length of the RV indication field.

20. The method according to claim 14, further comprising:
sending, by the network device, configuration signaling to the terminal device, wherein the configuration signaling carries RV indication information, and the RV indication information is configured to determine the RV used for the repetition of the Msg3 at the terminal device.

21. The method according to claim 14, further comprising:
sending, by the network device, Downlink Control Information (DCI) used for scheduling transmission of the RAR to the terminal device, wherein the DCI comprises an RV indication field, RV indication information is carried in the RV indication field, and the RV indication information is configured to determine the RV used for the repetition of the Msg3 at the terminal device.

22. The method according to claim 21, wherein the RV indication field is configured to indicate the RV used for the repetition of the Msg3.

23. The method according to claim 21, wherein the RV indication field is configured to indicate RV information used by a Physical Downlink Share Channel (PDSCH).

24. The method according to any one of claims 14 to 23, wherein the RV indication information indicates the RV used for at least one time of repetition of the Msg3.

25. The method according to any one of claims 14 to 23, wherein the RV indication information indicates the RV used for the repetition of the Msg3 with n mod 4=0, wherein n is a serial number of the repetition.

26. A terminal device, comprising:
a receiving module, configured to receive a Random Access Response (RAR), wherein the RAR carries an Uplink grant (UL grant) for repetition of a Message 3 (Msg3) in a random access procedure;
a determination module, configured to determine a redundancy version (RV) used for the repetition of the Msg3; and
a transmission module, configured to perform, based on the RAR, repetition of the Msg3 by use of the RV.

27. The terminal device according to claim 26, wherein the determination module is configured to:
acquire RV indication information carried by the UL grant; and
determine the RV used for the repetition of the Msg3 based on the RV indication information.

28. The terminal device according to claim 27, wherein the UL grant comprises an RV indication field, and the RV indication information is carried in the RV indication field.

29. The terminal device according to claim 28, wherein the UL grant further comprises a first bit field, and the first bit field comprises at least one of following items:
a frequency hopping flag field;
a Physical Uplink Share Channel (PUSCH) frequency resource allocation field;
a PUSCH time resource allocation field;
a Modulation and Coding Scheme (MCS) field;
a Transmission Power Control Command (TPC) field for PUSCH;
a Channel State Information (CSI) request field; and
a Channel Access-Cyclic Prefix Extension (Channel Access-CPext) field.

30. The terminal device according to claim 29, wherein the UL grant comprising the RV indication field and the UL grant not comprising the RV indication field are provided with at least one identical first bit field,
wherein a length of the first bit field in the UL grant comprising the RV indication field is as same as a length of the first bit field in the UL grant not comprising the RV indication field.

31. The terminal device according to claim 29, wherein the UL grant comprising the RV indication field and the UL grant not comprising the RV indication field are provided with at least one identical first bit field,
wherein a length of the first bit field in the UL grant comprising the RV indication field is M bits smaller than a length of the first bit field in the UL grant not comprising the RV indication field, wherein M is an integer greater than or equal to N, and N is a length of the RV indication field.

32. The terminal device according to claim 26, wherein the determination module is configured to:
receive configuration signaling, wherein the configuration signaling carries RV indication information; and
determine the RV used for the repetition of the Msg3 based on the RV indication information.

33. The terminal device according to claim 26, wherein the determination module is configured to:
receive Downlink Control Information (DCI) used for scheduling transmission of the RAR, wherein the DCI comprises an RV indication field, and RV indication information is carried in the RV indication field; and
determine the RV used for the repetition of the Msg3 based on the RV indication information.

34. The terminal device according to claim 33, wherein the RV indication field is configured to indicate the RV used for the repetition of the Msg3.

35. The terminal device according to claim 33, wherein the RV indication field is configured to indicate RV information used by a Physical Downlink Share Channel (PDSCH).

36. The terminal device according to claim 26, wherein the determination module is configured to:
determine the RV used for the repetition of the Msg3 according to presetting.

37. The terminal device according to any one of claims 27 to 35, wherein the RV indication information indicates the RV used for at least one time of repetition of the Msg3.

38. The terminal device according to any one of claims 27 to 35, wherein the RV indication information indicates the RV used for the repetition of the Msg3 with n mod 4=0, wherein n is a serial number of the repetition.

39. A network device, comprising:
a first sending module, configured to send a Random Access Response (RAR) to a terminal device, wherein the RAR carries an Uplink grant (UL grant) for repetition of a Message (Msg3), the RAR is configured to determine a redundancy version (RV) used for the repetition of the Msg3 at the terminal device, and the RV is used to perform repetition of the Msg3.

40. The network device according to claim 39, wherein RV indication information is carried by the UL grant, and the RV indication information is configured to determine the RV used for the repetition of the Msg3 at the terminal device.

41. The network device according to claim 40, wherein the UL grant comprises an RV indication field, and the RV indication information is carried in the RV indication field.

42. The network device according to claim 41, wherein the UL grant further comprises a first bit field, and the first bit field comprises at least one of following items:
a frequency hopping flag field;
a Physical Uplink Share Channel (PUSCH) frequency resource allocation field;
a PUSCH time resource allocation field;
a Modulation and Coding Scheme (MCS) field;
a Transmission Power Control Command (TPC) field for PUSCH;
a Channel State Information (CSI) request field; and
a Channel Access-Cyclic Prefix Extension (Channel Access-CPext) field.

43. The network device according to claim 42, wherein the UL grant comprising the RV indication field and the UL grant not comprising the RV indication field are provided with at least one identical first bit field,
wherein a length of the first bit field in the UL grant comprising the RV indication field is as same as a length of the first bit field in the UL grant not comprising the RV indication field.

44. The network device according to claim 42, wherein the UL grant comprising the RV indication field and the UL grant not comprising the RV indication field are provided with at least one identical first bit field,
wherein a length of the first bit field in the UL grant comprising the RV indication field is M bits smaller than a length of the first bit field in the UL grant not comprising the RV indication field, wherein M is an integer greater than or equal to N, and N is a length of the RV indication field.

45. The network device according to claim 39, further comprising:
a configuration module, configured to send configuration signaling to the terminal device, wherein the configuration signaling carries RV indication information, and the RV indication information is configured to determine the RV used for the repetition of the Msg3 at the terminal device.

46. The network device according to claim 39, further comprising:
a second sending module, configured to send Downlink Control Information (DCI) used for scheduling transmission of the RAR to the terminal device, wherein the DCI comprises an RV indication field, RV indication information is carried in the RV indication field, and the RV indication information is configured to determine the RV used for the repetition of the Msg3 at the terminal device.

47. The network device according to claim 46, wherein the RV indication field is configured to indicate the RV used for the repetition of the Msg3.

48. The network device according to claim 46, wherein the RV indication field is configured to indicate RV information used by a Physical Downlink Share Channel (PDSCH).

49. The network device according to any one of claims 39 to 48, wherein the RV indication information indicates the RV used for at least one time of repetition of the Msg3.

50. The network device according to any one of claims 39 to 48, wherein the RV indication information indicates the RV used for the repetition of the Msg3 with n mod 4=0, wherein n is a serial number of the repetition.

51. A terminal device, comprising a processor, a memory and a transceiver, wherein the memory is configured to store a computer program, the processor being configured to call and run the computer program stored in the memory to control the transceiver to implement the method according to any one of claims 1 to 13.

52. A network device, comprising a processor, a memory and a transceiver, wherein the memory is configured to store a computer program, the processor is configured to call and run the computer program stored in the memory to control the transceiver to implement the method according to any one of claims 14 to 25.

53. A chip, comprising a processor configured to call and run a computer program from a memory, to cause a device provided with the chip to implement the method according to any one of claims 1 to 13.

54. A chip, comprising a processor configured to call and run a computer program from a memory, to cause a device provided with the chip to implement the method according to any one of claims 14 to 25.

55. A computer readable storage medium, configured to store a computer program, the computer program enabling a computer to execute the method according to any one of claims 1 to 13.

56. A computer readable storage medium, configured to store a computer program, the computer program enabling a computer to execute the method according to any one of claims 14 to 25.

57. A computer program product, comprising a computer program instruction, the computer program instruction enabling a computer to execute the method according to any one of claims 1 to 13.

58. A computer program product, comprising a computer program instruction, the computer program instruction enabling a computer to execute the method according to any one of claims 14 to 25.

59. A computer program, the computer program enabling a computer to execute the method according to any one of claims 1 to 13.

60. A computer program, the computer program enabling a computer to execute the method according to any one of claims 14 to 25.

61. A communication system, comprising:
a terminal device, configured to implement the method according to any one of claims 1 to 13; and
a communication device, configured to implement the method according to any one of claims 14 to 25.
